# FASCICULE DE BREVET EUROPEEN

(11) **EP 4 145 405 B1**
(45) Date de publication et mention de la délivrance du brevet: **22.07.2026**
(21) Numéro de dépôt: 21306198.9
(22) Date de dépôt: 02.09.2021
(51) Int. Cl.: G06V 10/82, G06V 20/52, G06F 18/22

(54) **PROCÉDÉ D'ENTRAINEMENT D'UN RÉSEAU NEURONAL D'ANALYSE D'IMAGE, ET PROCÉDÉ DE RÉ-IDENTIFICATION D'OBJET METTANT EN OEUVRE UN TEL RÉSEAU NEURONAL**
VERFAHREN ZUM TRAINIEREN EINES NEURONALEN NETZES ZUR BILDANALYSE UND VERFAHREN ZUR ERNEUTEN IDENTIFIZIERUNG VON OBJEKTEN UNTER VERWENDUNG EINES SOLCHEN NEURONALEN NETZES
METHOD FOR DRIVING AN IMAGE ANALYSIS NEURAL NETWORK, AND METHOD FOR OBJECT RE-IDENTIFICATION IMPLEMENTING SUCH A NEURAL NETWORK

(43) Date de publication de la demande: 08.03.2023
(73) Titulaire: Bull SAS, 78340 Les Clayes-sous-Bois (FR)
(72) Inventeur: OSPICI, Matthieu, 38000 Grenoble (FR)
(74) Mandataire: IPAZ

(56) Documents cités:
- US-A1- 2019 066 313
- US-A1- 2020 226 421
- CHEN YUE ET AL: "Channel Positive and Negative Feedback Network for Target Tracking", IEEE ACCESS, IEEE, USA, vol. 9, 18 January 2021 (2021-01-18), pages 15004 - 15014, XP011833273, DOI: 10.1109/ACCESS.2021.3052511
- LEAL-TAIXE LAURA ET AL: "Learning by Tracking: Siamese CNN for Robust Target Association", 2016 IEEE CONFERENCE ON COMPUTER VISION AND PATTERN RECOGNITION WORKSHOPS (CVPRW), IEEE, 26 June 2016 (2016-06-26), pages 418 - 425, XP033027855, DOI: 10.1109/CVPRW.2016.59

## Description

La présente invention concerne un procédé d'entrainement d'un réseau neuronal d'analyse d'image, en particulier un réseau neuronal d'analyse d'image par régression. Elle concerne également un réseau neuronal obtenu par un tel procédé et un procédé de ré-identification d'objet mettant en œuvre un tel réseau neuronal.

Le domaine de l'invention est de manière générale le domaine des réseaux neuronaux pour le traitement d'images, en particulier par régression, et plus particulièrement des réseaux neuronaux utilisés pour la ré-identification d'objet dans des images.

### État de la technique

Depuis quelques années, les systèmes basés sur des réseaux de neurones profonds ont montré qu'ils étaient extrêmement efficaces dans le contexte de la ré-identification de personnes ou d'objets dans les images. Les meilleurs systèmes utilisent un réseau de neurones dont l'architecture est basée sur des convolutions, par exemple l'architecture Resnet50.

Avant son utilisation, le réseau de neurones est entrainé sur un jeu de données dont l'objectif est d'optimiser une fonction de coût qui peut être double, c'est-à-dire une fonction prenant en compte une double erreur, à savoir une erreur par triplet, « triplet loss » en anglais, une erreur classique, appelée « loss d'identification » en anglais. La fonction de coût correspond généralement à la somme des erreurs obtenues pour toutes le images du jeu d'entrainement, et l'entrainement a pour but de minimiser ladite fonction de coût. Une fois le réseau de neurones entraîné, une image est donnée en entrée dudit réseau de neurones qui fournit en sortie, une « signature » numérique. La similarité entre deux images est déterminée en calculant une distance, par exemple une distance euclidienne ou une distance cosinus, entre les signatures de ces images.

Le jeu d'images d'entrainement utilisé est généralement un jeu de d'images issu du monde académique. Or, la performance d'un réseau de neurones ainsi entrainé chute lorsqu'il est utilisé sur des images réelles qui varient légèrement de celles du jeu d'entrainement, par exemple en cas de différences de luminosité ou d'angle de vue entre les images d'entrainement et l'image réelle. La chute de performance peut atteindre 60%, ce qui est considérable.

Il est également fait référence au document US 2019/066313 A1 (KIM MIN YOUNG [US] ET AL) du 28 février 2019, qui décrit un dispositif et un procédé permettant de suivre des objets dans une vidéo à l'aide d'un réseau neuronal siamois ou siamois amélioré. Le réseau extrait les caractéristiques d'images successives, intègre les informations sur la position et la taille des objets, et associe les objets entre les images en calculant leur similarité. L'apprentissage s'effectue en deux étapes à l'aide de paires d'images correspondantes et non correspondantes.

Un but de la présente invention est de remédier à cet inconvénient.

Un autre but de l'invention est de proposer une solution d'entrainement d'un réseau de neurones utilisé pour le traitement d'image dont la performance est plus stable.

Un autre but de l'invention est de proposer une solution d'entrainement d'un réseau de neurones utilisé pour le traitement d'image dont la performance obtenue sur les images réelles diminue moins comparée à celle obtenue en entrainement sur les images d'entrainement.

### Exposé de l'invention

L'invention propose d'atteindre au moins l'un des buts précités par un procédé, mis en œuvre par ordinateur, d'entrainement d'un réseau de neurones fournissant une signature numérique pour chaque image donnée en entrée dudit réseau de neurones, ledit procédé comprenant une première phase d'entrainement dudit réseau de neurones avec un jeu d'images d'entrainement et un algorithme d'entrainement visant à minimiser une première fonction de coût, dans lequel la première phase d'entrainement comporte une pluralité d'itérations des étapes suivantes :
- fourniture d'une image dudit jeu d'images d'entrainement audit réseau de neurones pour obtenir une signature numérique pour ladite image ;
- calcul, en fonction de la signature numérique obtenue, d'une erreur pour ladite image ;
- mise à jour des paramètres d'au moins une couche du réseau de neurones pour minimiser la première fonction de coût en fonction de chaque erreur calculée,

en ce que ledit procédé comprend en outre une deuxième phase d'entrainement comprenant au moins une itération des étapes suivantes :
   - fourniture d'une image provenant dudit jeu d'images d'entrainement audit réseau de neurones pour obtenir une signature, dite réelle,
   - génération d'au moins une signature, dite artificielle, à partir de ladite signature réelle, par introduction d'une erreur artificielle,
   - calcul d'une erreur en fonction desdites signatures réelle et artificielle(s), et
   - mise à jour d'au moins une couche dudit réseau de neurones, en fonction de ladite erreur, en vue de minimiser une deuxième fonction de coût,
et en ce que la deuxième phase d'entrainement comprend, préalablement à l'étape de mise à jour, une étape de blocage d'au moins une couche du réseau de neurones de sorte que ladite au moins une couche bloquée n'est pas mise à jour lors de l'étape de mise à jour.

Ainsi, l'invention propose un entrainement, ou un apprentissage, d'un réseau de neurones en deux phases. Lors de la première phase d'entrainement, le réseau de neurones est entrainé sur un jeu d'images d'entrainement, de manière classique. Ensuite, lors d'une deuxième phase, le réseau de neurones, déjà entrainé lors de la première phase, subit un deuxième entrainement. Ce deuxième entrainement intègre, dans l'apprentissage du réseau de neurones, des variations en s'appuyant sur la signature fournie par le réseau de neurones suite à son entrainement lors de la première phase. Ces variations sont matérialisées au travers de signatures artificielles, obtenues à partir de la signature réelle, et qui introduisent une erreur artificielle prise en compte dans la deuxième fonction de coût que la deuxième phase d'entrainement vise à minimiser. Ainsi, le procédé selon l'invention propose entrainement permettant au réseau de neurones d'avoir une performance moins dépendante des variations, telles que des différences de luminosité ou d'angle de vue, entre les images du jeu d'entrainement et les images réelles traitées lors de son utilisation.

Dans la présente demande par « ré-identification d'objet » dans des images, on entend une ré-identification d'une personne, d'un animal ou encore d'un objet, tel que par exemple un véhicule.

Lors d'au moins une itération, en particulier de toutes les itérations, de la deuxième phase d'entrainement les poids de chaque couche bloquée ne sont pas mis à jour.

Le blocage d'une ou plusieurs couches du réseau de neurones permet de conserver, pour ces couches, les poids calculés lors de la première phase d'entrainement et donc de conserver la performance du réseau de neurones entrainé sur les images du jeu d'entrainement.

Suivant un exemple de réalisation, le nombre de couches bloquées lors de la deuxième phase d'entrainement est compris entre 20 et 40, et en particulier égal à 30.

Lors de la deuxième phase d'entrainement, l'étape de mise à jour peut être réalisée en utilisant le même algorithme d'entrainement que la première phase d'entrainement.

Cette caractéristique permet de conserver au maximum les résultats de la première phase d'entrainement.

Préférentiellement, l'algorithme d'entrainement de la première phase d'entrainement utilise, ou peut être, la méthode de retropropagation du gradient.

Préférentiellement, l'algorithme d'entrainement de la deuxième phase d'entrainement utilise, ou peut être, une méthode de retropropagation du gradient.

Suivant des modes de réalisation préférés, au moins une signature artificielle peut être générée à partir d'une distribution normale dont :
- la moyenne correspond à la signature réelle ;
- la variance, en particulier la variance normalisée, est une valeur prédéterminée, par exemple 0,1.

Bien entendu, il est possible d'utiliser toute autre fonction pour générer au moins une signature artificielle à partir de la signature réelle. Préférentiellement, chaque signature artificielle peut correspondre à la signature réelle légèrement modifiée, de sorte à prendre en compte les légères variations qu'il peut y avoir dans les images à traiter par le réseau de neurones, en comparaison aux images d'entrainement. Ces variations peuvent comprendre une variation de l'angle de prise de l'image, une variation de luminosité, etc.

Suivant des modes de réalisation, pour une signature réelle, le nombre de signatures artificielles générées peut être supérieur à 1, et en particulier compris entre 3 et 7, et encore plus particulièrement égal à 5.

Ainsi, le procédé selon l'invention permet de prendre en compte de légères variations dans les images, sans pour autant augmenter les ressources informatiques et le temps nécessaires pour l'entrainement du réseau de neurones.

Suivant des modes de réalisation, la première fonction de coût peut être une fonction de coût double prenant en compte une double erreur, à savoir :
- une erreur par triplet (« triplet loss ») ou une erreur « contrastive loss » ou encore une erreur « circle loss » telle que définie à la page https://arxiv.org/pdf/2002.10857.pdf; et
- une erreur de perte (« loss identification »), ou erreur de classification, par exemple une erreur cross-entropie telle que définie à la page https://www.tensorflow.org/api_docs/python/tf/keras/losses/Categ oricalCrossentropy).

Ainsi, pour chaque image une valeur de perte par triplet et une valeur d'erreur de perte de classification sont calculées.

Suivant un mode de réalisation, la première fonction de coût peut comprendre deux composantes : une composante de cout par triplet prenant en compte l'erreur par triplet et une composante de coût de classification classique prenant en compte par exemple l'erreur cross-entropie. Dans ce cas, l'algorithme d'entrainement peut avoir pour objectif soit de minimiser chaque composante de coût individuellement, ou la somme de deux composantes.

Alternativement, la première fonction de coût peut comprendre une unique composante de coût prenant en compte une combinaison de l'erreur par triplet et de l'erreur de classification classique obtenue pour chaque image, par exemple une moyenne de ces erreurs pour chaque image. Dans ce cas, l'algorithme d'entrainement peut avoir pour objectif de minimiser ladite unique composante.

L'erreur triplet loss, l'erreur contrastive loss, l'erreur circle-loss, l'erreur loss identification ou l'erreur cross-entropie loss sont bien connues de l'homme du métier. Il n'est donc pas nécessaire de les détailler plus ici par soucis de concision.

Suivant des modes de réalisation non limitatifs, la deuxième fonction de coût peut être identique à la première fonction de coût.

Suivant des modes de réalisation alternatifs, la deuxième fonction de coût peut calculer une erreur, dite agrégée, prenant en compte, par exemple par addition :
- une erreur, dite réelle, calculée en fonction de la signature réelle ;
- une erreur, dite artificielle, en fonction de chaque signature artificielle, par exemple par moyennage des erreurs artificielles obtenues pour toutes les signatures artificielles.

Suivant un exemple de réalisation, l'erreur réelle peut être une erreur triplet loss ou une erreur loss identification.

Suivant un exemple de réalisation, une erreur artificielle est calculée pour chaque signature réelle, par exemple une erreur triplet loss ou une erreur loss identification. Puis, une moyenne d'erreur artificielle est calculée en faisant la moyenne de toutes les erreurs artificielles obtenues pour toutes les signatures artificielles. Enfin, une erreur totale est calculée en faisant la somme de l'erreur réelle et la moyenne des erreurs artificielles. L'algorithme d'entrainement utilisée lors de la deuxième phase d'entrainement a pour objectif de minimiser une fonction de coût prenant en compte cette erreur totale pour chaque image d'entrainement.

Selon un autre aspect de l'invention, il est proposé un réseau de neurones convolutif entraîné par un procédé d'entrainement selon l'invention.

Le réseau de neurones peut être un CNN, de type Resnet par exemple.

Le réseau de neurones peut comprendre 50 couches.

Selon un autre aspect de l'invention, il est proposé un procédé, mis en œuvre par ordinateur, de ré-identification d'objets dans des images mettant en œuvre un réseau de neurones entrainé selon l'invention.

En particulier, le procédé de ré-identification selon l'invention peut comprendre au moins une itération des étapes suivantes :
- génération, par ledit réseau de neurones, d'une première signature pour une première image d'un premier objet fournie audit réseau de neurones ;
- génération, par ledit réseau de neurones, d'une deuxième signature pour au moins une deuxième image d'un deuxième objet fournie audit réseau de neurones ; et
- calcul d'une distance, respectivement d'une similitude, entre ladite première signature et ladite au moins une deuxième signature.
La distance, respectivement la similitude, calculée est ensuite utilisée pour déterminer si le deuxième objet correspond ou non au premier objet en fonction d'au moins un seuil de distance, respectivement de similitude, prédéfini.

Le procédé selon l'invention peut être utilisé pour la ré-identification de personne(s) sur des images.

Le procédé selon l'invention peut être utilisé pour la ré-identification d'objet(s) non humain(s), tel qu'une voiture, sur des images.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1a est une représentation schématique d'un exemple de réalisation non limitatif de contrastive loss pouvant être utilisé dans la présente invention ;
- la FIGURE 1b est une représentation schématique d'un exemple de réalisation non limitatif de triplet loss pouvant être utilisé dans la présente invention ;
- la FIGURE 2 est une représentation schématique d'un exemple de réalisation non limitatif d'un procédé d'entrainement selon la présente invention ; et
- la FIGURE 3 est une représentation schématique d'un exemple de réalisation non limitatif d'un procédé de ré-identification selon la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

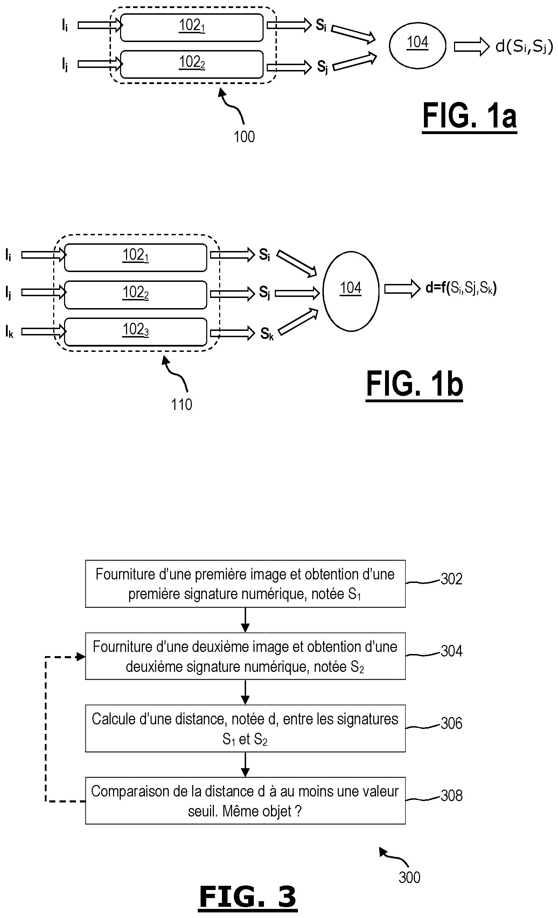

La FIGURE 1a est une représentation schématique d'un exemple de réalisation non limitatif de contrastive loss pouvant être utilisé dans la présente invention.

La FIGURE 1a représente un générateur de signature 100 comprenant deux réseaux de réseaux de neurones, 102₁ et 102₂ d'architectures identiques. Autrement dit, le réseau neuronal 102₁ est identique au réseau neuronal 102₂. Par exemple, les réseaux neuronaux 102₁ et 102₂ peuvent être des réseaux neuronaux siamois.

Les deux réseaux neuronaux 102₁ et 102₂ partageant exactement les mêmes paramètres. Les mises à jour des paramètres sont synchronisées entre les deux réseaux 102₁ et 102₂, c'est-à-dire que lorsqu'on met à jour les paramètres d'un des réseaux 102₁ et 102₂, ceux de l'autre des réseaux 102₁ et 102₂ sont également mis à jour de la même façon. Ainsi, à chaque instant t, les valeurs des paramètres des réseaux 102₁ et 102₂ sont exactement les mêmes.

Chacun des réseaux 102₁ et 102₂ prend en entrée une image et fournit en sortie une signature numérique pour cette image. Un comparateur 104 prend en entrée les signatures fournies par chacun des réseaux 102₁ et 102₂. Le comparateur 104 est configuré pour déterminer une distance, par exemple la distance cosinus ou euclidienne, ou une similitude, par exemple la similitude cosinus ou euclidienne, entre les signatures fournies par les réseaux neuronaux 102₁ et 102₂.

Dans l'exemple représenté, le réseau neuronal 102₁ produit une signature Si pour l'observation Iᵢ et le réseau neuronal 102₂ produit une signature Sⱼ pour l'observation Iⱼ. Le comparateur 104 détermine la distance cosinus normalisée, notée d(Sᵢ,Sⱼ), entre les deux signatures Si et Sⱼ. Cette distance d(Sᵢ,Sⱼ) doit être minimisée si les deux signatures appartiennent à la même entité, et maximisée dans le cas contraire.

Une fonction de coût peut ensuite être définie, par exemple comme étant une somme de toutes les distances obtenues pour toutes les images d'entrainement. L'algorithme d'entrainement d'un réseau neuronal a pour objectif de minimiser la fonction de coût ainsi définie.

La FIGURE 1b est une représentation schématique d'un exemple de réalisation non limitatif de triplet loss pouvant être utilisé dans la présente invention.

La FIGURE 1b représente un générateur de signature 110 comprenant trois réseaux neuronaux 102₁, 102₂ et 102₃ d'architecture identique, chacun prévu pour prendre en entrée une image et fournir en sortie une signature numérique pour cette image. Les trois réseaux neuronaux 102₁, 102₂ et 102₃ partageant exactement les mêmes paramètres. Les mises à jour des paramètres sont synchronisées entre les trois réseaux 102₁-102₃, c'est-à-dire que lorsqu'on met à jour les paramètres d'un des réseaux 102₁-102₃, ceux des deux autres des réseaux 102₁-102₃sont également mis à jour de la même façon. Ainsi, à chaque instant t, les valeurs des paramètres des réseaux 102₁-102₃ sont exactement les mêmes.

Chacun des réseaux 102₁-102₃ prend en entrée une image et fournit en sortie une signature numérique pour cette image.

Un comparateur 104 prend en entrée les signatures fournies par chacun des réseaux 102₁-102₃ et configuré pour comparer entre-elles ces signatures, par exemple en calculant la distance entre ces signatures prises deux à deux.

Dans l'exemple représenté, le réseau neuronal 202₁ produit une signature Si pour une image Iᵢ, le réseau neuronal 202₂ produit une signature Sⱼ pour une image Iⱼ, identique à l'image Iᵢ, et le réseau neuronal 202₃ produit une signature Sₖ pour une image Iₖ différente de l'image Iᵢ. Le comparateur 204 détermine une erreur en fonction des signatures numériques Si, Sᵢ et Sₖ, avec la signature numérique Si l'entrée d'ancrage, la signature Sⱼ l'entrée positive et la signature Sₖ l'entrée négative. Il est possible de trouver plus d'information sur la Triplet Loss à la page :
https://fr.wikipedia.org/wiki/Fonction de co%C3%BBt par triplet

Une fonction de coût peut ensuite être définie, par exemple comme étant une somme de toutes les erreurs par triplet obtenues pour toutes les images d'entrainement. L'algorithme d'entrainement d'un réseau neuronal a pour objectif de minimiser la fonction de coût ainsi définie.

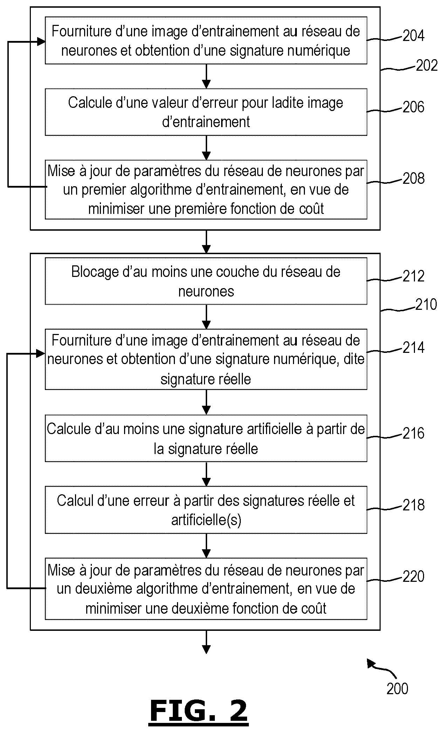

La FIGURE 2 est une représentation schématique d'un procédé d'entrainement d'un réseau neuronal selon l'invention.

Le procédé 200 peut être utilisé pour l'entrainement d'un réseau de neurones utilisé pour générer une signature numérique d'une image donnée en entrée dudit réseau neuronal.

Le réseau de neurones peut être un réseau neuronal convolutif, ou un réseau de neurones à convolution, par exemple un réseau CNN resnet comprenant 50 couches.

Le procédé 200 représenté sur la FIGURE 2 comprend une première phase d'entrainement 202. Cette première phase réalise un apprentissage classique du réseau de neurones, en utilisant un jeu d'images d'entrainement, également appelé jeu d'entrainement dans la suite.

Le jeu d'entrainement peut être un jeu d'images issu du monde académique. Par exemple, le jeu d'entrainement peut être l'un quelconque, et de préférence une combinaison quelconque, des jeux d'images suivants :
- CHUK01, « Human Reidentificaiton with Transferred Metric Learning », de Li Wei, Zhao Rui et Wang Wiaogang, ACCV, 2012
- CHUK03, « DeepReID: Deep Filter Pairing Neural Network for Person Re-identification » de Li Wei, Zhao Rui , Xiao Tong et Wang Wiaogang, CVPR, 2014
- Market1501, « Improving Person Re-identificiation by Attribute and Identity Learning », de Lin Yutian, Zheng Liang, Zhang Zhedong,

De manière classique, la première phase d'entrainement comprend plusieurs itérations des étapes suivantes.

Lors d'une étape 204, une image est fournie au réseau neuronal. Celui-ci fournit alors une signature numérique pour cette image.

Lors d'une étape 206, une erreur est calculée, pour cette image en fonction de la signature obtenue lors de l'étape 204. L'erreur calculée lors de l'étape 206 peut être l'erreur « Contrastive Loss » décrite en référence à la FIGURE 1a. Alternativement, l'erreur calculée lors de l'étape 206 peut être l'erreur « Triplet Loss » décrite en référence à la FIGURE 1b.

De préférence, l'erreur calculée lors de l'étape 206 peut être une double-erreur combinant :
- une erreur « Triplet loss », ou une erreur « Contrastive loss » ou encore une erreur « Circle loss » (https://arxiv.org/pdf/2002.10857.pdf)°; et
- une erreur « loss identification », par exemple une erreur « cross-entropie »(https://www.tensorflow.org/api_docs/python/tf/keras/lo sses/CategoricalCrossentropy).

Lors d'une étape 208, les paramètres d'au moins une couche du réseau neuronal sont mis à jour pour tenter de minimiser une première fonction de coût prenant en compte toutes les erreurs calculées pour toutes les images d'entrainement. La mise à jour des paramètres du réseau neuronal se fait par un algorithme d'entrainement, tel que par exemple un algorithme de retropropagation du gradient.

Les étapes 204-208 sont réitérées autant de fois que souhaité jusqu'à ce que le réseau neuronal soit suffisamment entrainé, c'est-à-dire jusqu'à ce que la première fonction de coût soit minimisée, et encore plus particulièrement jusqu'à ce que la première fonction de coût retourne une valeur inférieure ou égale à un seuil prédéterminé.

Par exemple, la première phase d'entrainement 202 peut être arrêtée, et le réseau neuronal peut être considéré comme étant suffisamment entrainé, lorsque la première fonction de coût ne diminue plus pendant dix itérations de ladite première phase 202.

Le procédé 200 représenté sur la FIGURE 2 comprend une deuxième phase d'entrainement 210, utilisant le réseau de neurones entrainé lors de la première phase d'entrainement 202.

Cette deuxième phase d'entrainement 210 réalise un nouvel apprentissage du réseau de neurones, en utilisant, par exemple, le même jeu d'image d'entrainement que celui utilisé lors de la première phase, mais en utilisant une fonction de coût différente.

Lors d'une étape 212 de cette deuxième phase d'entrainement 210, un certain nombre de couches du réseau de neurones sont bloquées de sorte que ces couches ne seront pas mises à jour lors de la deuxième phase d'entrainement 210. Par exemple, le nombre de couches bloquées peut être égal à 30.

Lors d'une étape 214, une image est fournie au réseau neuronal. Celui-ci fournit alors une signature numérique pour cette image. Cette signature, appelé signature réelle et notée Sᵣ dans la suite, est censée être une signature qui correspond parfaitement à cette image puisque le réseau de neurones a déjà été entrainé lors de la première phase d'entrainement 202.

Lors d'une étape 216, N signature(s), dite(s) signature(s) artificielle(s), sont générées à partir de la signature réelle fournie à l'étape 214 par le réseau de neurones. Suivant un exemple de réalisation non limitatif, les signatures artificielles sont générées suivant un modèle de distribution normale de moyenne Sᵣ et de variance V. Suivant un exemple de réalisation nullement limitatif, N=5 et V=0,1.

Lors d'une étape 218, une erreur est calculée, en fonction d'une part de la signature réelle Sᵣ et de l'au moins une signature artificielle.

L'erreur calculée peut être l'erreur « Contrastive Loss » décrite en référence à la FIGURE 1a.

Suivant un exemple de réalisation, une erreur artificielle est calculée pour chaque signature artificielle. Puis, une moyenne d'erreur artificielle est calculée en faisant la moyenne de toutes les erreurs artificielles obtenues pour toutes les signatures artificielles. Enfin, une erreur totale est calculée en faisant la somme de l'erreur réelle obtenue pour la signature réelle, et la moyenne des erreurs artificielles.

Lors d'une étape 220, les paramètres d'au moins une couche du réseau neuronal sont mis à jour pour tenter de minimiser une deuxième fonction de coût prenant en compte toutes les erreurs de toutes les images d'entrainement, par exemple par addition. La mise à jour des paramètres du réseau neuronal se fait par un deuxième algorithme d'entrainement, tel que par exemple un algorithme de retropropagation du gradient. Lors de cette mise à jour, les paramètres des couches bloquées à l'étape 212 ne sont pas modifiées.

Les étapes 214-220 sont réitérées autant de fois que souhaité jusqu'à ce que le réseau neuronal soit suffisamment entrainé, c'est-à-dire jusqu'à ce que la deuxième fonction de coût est minimisée, en d'autre termes lorsque la deuxième fonction de coût retourne une valeur inférieure ou égale à un seuil prédéterminé.

Par exemple, la deuxième phase d'entrainement 210 peut être arrêtée, et le réseau neuronal peut être considéré comme étant suffisamment entrainé, lorsque la deuxième fonction de coût ne diminue plus pendant dix itérations de ladite deuxième phase d'entrainement 210.

La FIGURE 3 est une représentation schématique d'un exemple de réalisation non limitatif d'un procédé de ré-identification selon la présente invention.

Le procédé 300 de la FIGURE 3 peut être utilisé pour la ré-identification d'objets ou de personnes sur des images. On rappelle que, dans la présente demande, par « ré-identification d'objet », on entend de manière générale une ré-identification d'objets, de personnes, d'animaux, etc.

Le procédé 300 utilise un réseau de neurones entrainé selon la présente invention, tel que par exemple un réseau de neurones entrainé par le procédé 200 de la FIGURE 2.

Le procédé 300 comprend une étape 302 de fourniture d'une première image d'un premier objet au réseau de neurones entrainé. Cette étape 302 fournit une signature S₁.

Le procédé 300 comprend une étape 304 de fourniture d'une deuxième image d'un deuxième objet au réseau de neurones entrainé. Cette étape fournit une signature S₂.

Le réseau de neurones utilisé lors de l'étape 304 peut être le même réseau que celui utilisé lors de l'étape 302. Dans ce cas les étapes 302 et 304 réalisées à tour de rôle.

De préférence, le réseau de neurones utilisé lors de l'étape 304 est un autre réseau de neurones, identique au réseau de neurones utilisé lors de l'étape 302. Autrement dit, les étapes 302 et 304 utilisent deux réseaux de neurones siamois. Dans ce cas les étapes 302 et 304 peuvent être réalisées soit à tour de rôle, soit, et de préférence, en même temps.

Lors d'une étape 306, la signatures S₁ et S₂ sont comparées. Par exemple, une distance d, par exemple la distance cosinus ou euclidienne, est calculée entre les signatures S₁ et S₂.

Cette distance d est comparée à une valeur seuil prédéterminée lors d'une étape 308. Si la distance est inférieure à la valeur seuil alors cela indique que le deuxième objet est le même que le premier objet. Dans le cas contraire, cela indique que le premier objet et le deuxième objet sont des objets différents.

Ainsi, en réitérant les étapes 304-308 sur différentes images, il est possible d'identifier et suivre sur des images un objet apparaissant sur une première image.

Bien entendu l'invention n'est pas limitée aux exemples qui viennent d'être décrits.

## Revendications

1. Procédé (200), mis en œuvre par ordinateur, d'entrainement d'un réseau de neurones fournissant une signature numérique pour chaque image donnée en entrée dudit réseau de neurones, ledit procédé (200) comprenant une première phase d'entrainement (202) dudit réseau de neurones avec un jeu d'images d'entrainement et un algorithme d'entrainement visant à minimiser une première fonction de coût,
dans lequel la première phase d'entrainement (202) comporte une pluralité d'itérations des étapes suivantes :
- fourniture (204) d'une image dudit jeu d'images d'entrainement audit réseau de neurones pour obtenir une signature numérique pour ladite image ;
- calcul (206), en fonction de la signature numérique obtenue, d'une erreur pour ladite image ;
- mise à jour (208) des paramètres d'au moins une couche du réseau de neurones pour minimiser la première fonction de coût en fonction de chaque erreur calculée,
en ce que ledit procédé (200) comprend en outre une deuxième phase d'entrainement (210) comprenant au moins une itération des étapes suivantes :
- fourniture (214) d'une image provenant dudit jeu d'images d'entrainement audit réseau de neurones pour obtenir une signature, dite réelle,
- génération (216) d'au moins une signature, dite artificielle, à partir de ladite signature réelle, par introduction d'une erreur artificielle,
- calcul (218) d'une erreur en fonction desdites signatures réelle et artificielle(s), et
- mise à jour (220) d'au moins une couche dudit réseau de neurones, en fonction de ladite erreur, en vue de minimiser une deuxième fonction de coût,
et en ce que la deuxième phase d'entrainement (210) comprend, préalablement à l'étape de mise à jour (220), une étape (212) de blocage d'au moins une couche du réseau de neurones de sorte que ladite au moins une couche bloquée n'est pas mise à jour lors de l'étape de mise à jour (220).

2. Procédé (200) selon la revendication précédente, **caractérisé en ce que** l'étape de mise à jour (220) est réalisée en utilisant le même algorithme d'entrainement que la première phase d'entrainement (210).

3. Procédé (200) selon l'une quelconque des revendications précédentes, **caractérisé en ce que** l'algorithme d'entrainement utilise la méthode de retropropagation du gradient.

4. Procédé (200) selon l'une quelconque des revendications précédentes, **caractérisé en ce qu'**au moins une signature artificielle est générée à partir d'une distribution normale dont :
- la moyenne correspond à la signature réelle ;
- la variance est une valeur prédéterminée, par exemple 0,1.

5. Procédé (200) selon l'une quelconque des revendications précédentes, **caractérisé en ce que**, pour une signature réelle, le nombre de signatures artificielle générées est supérieur à 1, et en particulier égal à cinq.

6. Procédé (200) selon l'une quelconque des revendications précédentes, **caractérisé en ce que** la première fonction de coût est une fonction de coût double prenant en compte une double erreur, tel que par exemple :
- une erreur par triplet (« triplet loss ») ou une erreur contrastive loss, et
- une erreur loss identification, ou erreur de classification, par exemple une cross-entropie.

7. Procédé (200) selon l'une quelconque des revendications précédentes, **caractérisé en ce que** la deuxième fonction de coût calcule une erreur, dite agrégée, prenant en compte, par exemple par addition :
- une erreur, dite réelle, calculée en fonction de la signature réelle ;
- une erreur, dite artificielle, calculée en fonction de chaque signature artificielle, par exemple par moyennage des erreurs artificielles obtenues pour toutes les signatures artificielles.

8. Réseau de neurones convolutif entraîné par un procédé d'entrainement (200) selon l'une quelconque des revendications précédentes.

9. Procédé (300), mis en œuvre par ordinateur, de ré-identification d'objets dans des images mettant en œuvre un réseau de neurones entrainé par le procédé (200) selon l'une quelconque des revendications 1 à 7.

## Patentansprüche

1. Computerimplementiertes Verfahren (200) zum Trainieren eines neuronalen Netzes, das eine digitale Signatur für jedes in das neuronale Netz eingegebene Bild bereitstellt, wobei das Verfahren (200) eine erste Trainingsphase (202) des neuronalen Netzes mit einem Satz von Trainingsbildern und einem Trainingsalgorithmus umfasst, der darauf abzielt, eine erste Kostenfunktion zu minimieren, wobei die erste Trainingsphase (202) eine Vielzahl von Iterationen der folgenden Schritte umfasst:
- Bereitstellen (204) eines Bildes des Satzes von Trainingsbildern für das neuronale Netz, um eine digitale Signatur für das Bild zu erhalten;
- Berechnen (206) eines Fehlers für das Bild in Abhängigkeit von der erhaltenen digitalen Signatur;
- Aktualisieren (208) der Parameter mindestens einer Schicht des neuronalen Netzes, um die erste Kostenfunktion in Abhängigkeit von jedem berechneten Fehler zu minimieren,
wobei das Verfahren (200) ferner eine zweite Trainingsphase (210) umfasst, die mindestens eine Iteration der folgenden Schritte umfasst:
- Bereitstellen (214) eines Bildes aus dem Satz von Trainingsbildern für das neuronale Netz, um eine reale Signatur zu erhalten,
- Generieren (216) mindestens einer künstlichen Signatur aus der realen Signatur durch Einführen eines künstlichen Fehlers,
- Berechnen (218) eines Fehlers in Abhängigkeit von der realen und den künstlichen Signaturen, und
- Aktualisieren (220) mindestens einer Schicht des neuronalen Netzes in Abhängigkeit von dem Fehler, um eine zweite Kostenfunktion zu minimieren,
und dadurch, dass die zweite Trainingsphase (210) vor dem Schritt (220) des Aktualisierens einen Schritt (212) des Blockierens mindestens einer Schicht des neuronalen Netzes umfasst, sodass die mindestens eine blockierte Schicht während des Aktualisierungsschritts (220) nicht aktualisiert wird.

2. Verfahren (200) nach dem vorstehenden Anspruch, **dadurch gekennzeichnet, dass** der Schritt des Aktualisierens (220) unter Verwendung desselben Trainingsalgorithmus wie die erste Trainingsphase (210) durchgeführt wird.

3. Verfahren (200) nach einem der vorstehenden Ansprüche, **dadurch gekennzeichnet, dass** der Trainingsalgorithmus das Verfahren der Gradienten-Backpropagation verwendet.

4. Verfahren (200) nach einem der vorstehenden Ansprüche, **dadurch gekennzeichnet, dass** mindestens eine künstliche Signatur aus einer Normalverteilung erzeugt wird, deren:
- Mittel der tatsächlichen Signatur entspricht;
- Varianz ein vorbestimmter Wert ist, zum Beispiel 0,1.

5. Verfahren (200) nach einem der vorstehenden Ansprüche, **dadurch gekennzeichnet, dass** für eine reale Signatur die Anzahl der generierten künstlichen Signaturen größer als 1 und insbesondere gleich fünf ist.

6. Verfahren (200) nach einem der vorstehenden Ansprüche, **dadurch gekennzeichnet, dass** die erste Kostenfunktion eine doppelte Kostenfunktion ist, die einen doppelten Fehler berücksichtigt, wie zum Beispiel:
- einen Triplet-Loss oder einen Contrastive-Loss, und
- einen Identifikationsverlustfehler oder Klassifikationsfehler, zum Beispiel eine Kreuzentropie.

7. Verfahren (200) nach einem der vorstehenden Ansprüche, **dadurch gekennzeichnet, dass** die zweite Kostenfunktion einen aggregierten Fehler berechnet, der, zum Beispiel durch Addition, berücksichtigt:
- einen realen Fehler, der in Abhängigkeit von der realen Signatur berechnet wird;
- einen künstlichen Fehler, der in Abhängigkeit von jeder künstlichen Signatur berechnet wird, zum Beispiel durch Mittelung der für alle künstlichen Signaturen erhaltenen künstlichen Fehler.

8. Faltendes neuronales Netz (Convolutional Neural Network), das durch ein Trainingsverfahren (200) nach einem der vorstehenden Ansprüche trainiert wird.

9. Computerimplementiertes Verfahren (300) für die erneute Identifizierung von Objekten in Bildern, das ein neuronales Netz implementiert, das durch das Verfahren (200) nach einem der Ansprüche 1 bis 7 trainiert wird.

## Claims

1. **A** computer-implemented method (200) for training a neural network providing a digital signature for each image given as input to said neural network, said method (200) comprising a first training phase (202) of said neural network with a set of training images and a training algorithm aiming to minimize a first cost function, **characterized in that** the first training phase (202) comprises a plurality of iterations of the following steps:
- providing (204) an image from said set of training images to said neural network in order to obtain a digital signature for said image;
- computing (206) an error for said image, based on the obtained digital signature;
- updating (208) parameters of at least one layer of the neural network in order to minimize the first cost function based on each computed error,
**in that** said method (200) further comprises a second training phase (210) comprising at least one iteration of the following steps:
- providing (214) an image originating from said set of training images to said neural network in order to obtain a so-called real signature;
- generating (216) at least one so-called artificial signature from said real signature, by introducing an artificial error;
- calculating (218) an error based upon said real and artificial signatures; and
- updating (220) at least one layer of said neural network, based upon said error, in order to minimize a second cost function, and
**in that** the second training phase (210) comprises, prior to the update step (220), a step (212) of locking at least one layer of the neural network so that said at least one locked layer is not updated during the update step (220).

2. The method (200) according to the preceding claim, **characterized in that** the update step (220) is performed using the same training algorithm as the first training phase (210).

3. The method (200) according to any one of the preceding claims, **characterized in that** the training algorithm uses the gradient backpropagation method.

4. The method (200) according to any one of the preceding claims, **characterized in that** at least one artificial signature is generated from a normal distribution in which:
- the mean matches the real signature;
- the variance is a predetermined value, for example 0.1.

5. The method (200) according to any one of the preceding claims, **characterized in that**, for a real signature, the number of artificial signatures generated is greater than 1, and in particular equal to five.

6. The method (200) according to any one of the preceding claims, **characterized in that** the first cost function is a double cost function taking into account a double error, for example such as:
- a triplet loss or a contrastive loss, and
- a loss identification error, or classification error, for example a cross-entropy.

7. The method (200) according to any one of the preceding claims, **characterized in that** the second cost function calculates a so-called aggregate error, taking into account, for example by addition:
- a so-called real error, calculated based upon the real signature;
- a so-called artificial error, calculated based upon each artificial signature, for example by averaging the artificial errors obtained for all the artificial signatures.

8. A convolutional neural network trained by a training method (200) according to any one of the preceding claims.

9. **A** computer-implemented method (300) for re-identifying objects in images implementing a neural network trained by the method (200) according to any one of claims 1 to 7.
